(19) Europäisches Patentamt

European Patent Office

Office européen des brevets

(11) **EP 1 726 924 A1**

(12) **EUROPEAN PATENT APPLICATION**

(43) Date of publication:
**29.11.2006 Bulletin 2006/48**

(51) Int Cl.:
**G01G 19/00** (2006.01)

(21) Application number: **05257762.4**

(22) Date of filing: **16.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **23.05.2005 JP 2005149946**

(71) Applicant: **Incorporated Administrative Agency, National Agriculture and Bio-Oriented Research Organization Tsukuba-shi, Ibaraki 305-8517 (JP)**

(72) Inventors:
• **Morinaga, Kunihisa,**
**c/o Nat.Agricult.Bio Res. Org.**
**Zentsuji-shi**
**Kagawa 765-0053 (JP)**

• **Kusaba, Shinnosuke,**
**c/o Nat.Agricult.Bio Res. Org.**
**Zentsuji-shi**
**Kagawa 765-0053 (JP)**
• **Muramatsu, ,Noboru,**
**c/o Nat.Agricult.Bio Res. Org.**
**Zentsuji-shi**
**Kagawa 765-0053 (JP)**
• **Shimazaki, Masahiko,**
**c/o Nat.Agricult.Bio Res.Org.**
**Zentsuji-shi**
**Kagawa 765-0053 (JP)**
• **Hoshi, Norihiro,**
**c/o Nat.Agricult.Bio Res. Org.**
**Zentsuji-shi**
**Kagawa 765-0053 (JP)**

(74) Representative: **Woods, Geoffrey Corlett**
**J.A. KEMP & CO.**
**Gray's Inn**
**14 South Square**
**London WC1R 5JJ (GB)**

(54) **Method for measuring the weight of a plant body**

(57) A simple method for non-destructively measuring the weight of a tree comprises measuring the capacitance of the root portion and the weight of the root portion, or the entirety, of each of different plant species at different stages of growth in advance, and applying the correlation to a measured value of capacitance of a particular plant body under investigation. The method allows the weight of the root portion or the total weight of the plant body to be non-destructively estimated.

FIG. 1

R: RESISTANCE, C: CAPACITANCE,

se: SOIL-ELECTRODE, s: SOIL, r: ROOT

ep: ELECTRODE-TREE PORTION, x: TREE PORTION

Printed by Jouve, 75001 PARIS (FR)

# Description

BACKGROUND OF THE INVENTION

Field of the Invention

The present invention relates to a method for measuring the weight of plant bodies, such as a tree, and particularly to a method for measuring the weight of a plant body by measuring the electric capacitance thereof.

Background Art

Monitoring the weight of a plant body provides clues to its growth conditions and is therefore very important. For example, the weight of roots or leaves of a citrus tree, which is a fruit tree, provides clues to the growth condition (the growing power) of the tree, which in turn makes it possible to predict the yearly yield of the fruit. Further, knowing such weights allows for diagnosis of the growth condition or health of the tree, and it also makes it possible to predict the quality of growth of seedling.

Although the weight of roots or leaves of a plant body can be accurately measured by digging the plant out of ground, dismembering it and then weighing it, such destructive method cannot be used if the weight of the plant body, which keeps growing, is to be continuously measured. Although the weight of the aerial portion of a plant body can be estimated from a measured value provided by equipment, such method cannot be used for measuring the weight of the underground portion, such as the roots. Further, in the case of perennial trees, for example, it takes a great amount of labor to dig a tree from ground, and once the roots have been removed, they cannot be regenerated. Under these circumstances, a technology is required that allows for a non-destructive measurement of the weight of roots or leaves of plant bodies.

Conventionally, when the weight of the roots of a plant body that are underground is measured, the plant body is either entirely or partly dug out of ground, earth attached to it is removed, and then the weight of the rootlets is measured with a root scanner (see Non-patent Document 1). In another example, the root that has been dug out is hot-air dried before it is weighed (see Non-patent Document 2). When the distribution of a group of roots of a plant body that is underground is observed, a vertical hole is dug a certain distance away from the plant body so as to expose the root system of the plant, which is then photographed on a camera or the like in a method referred to as a trench method (see Non-patent Document 3).

In order to measure the growth of the roots of a plant body continuously, the minirhizotron method is used, for example, whereby a transparent tube of acrylic or glass material is inserted into the ground, and the underground roots are observed via the tube using a fiber scope (see Non-patent Document 4).

In order to observe the growth of the roots of a plant body in a non-destructive manner, the neutron radiography method is used (see Non-patent Document 5). In this method, a container with a plant body placed therein is irradiated with neutrons so as to expose an X-ray film, thereby allowing the shape of the plant to be observed. Because neutrons are greatly scattered by hydrogen contained in water molecules, the roots, which is a part of the plant bodies with a high water content, are highlighted on the film. Other methods for measuring the growth amount of the roots of plant bodies that have been proposed include the acoustic emission (AE) method (see Non-patent Document 6). In the AE method, which is based on the measurement of the sound generated when an object is destructed or deformed, involves the measurement of acoustic pulses generated from near the root ends when the roots of the plant body elongate. The method therefore allows the amount of growth of the roots of plant bodies to be known. In yet another method (see Patent Document 1), the roots are observed on the basis of the measurement of electric resistance between the roots of a plant body and the ground.

A technology has also been proposed whereby the electric capacitance of the root portion of a plant is measured and the surface area of the root is calculated, based on which the depth or extent of the root can be non-destructively monitored. Examples of actual application of the technology have been reported that involved annual crops, such as alfalfa (see Non-patent Document 7), tomatoes (see Non-patent Document 8), and sunflowers (see Non-patent Document 9).

Patent Document 1: JP Patent Publication (Kokai) No. 2002-71608 A Non-patent Document 1: Morita, S., Jpn J. Corp Sci. 61:101-106, 1992 Non-patent Document 2: Box, J.E., Ramseur, E.L., Agron J. 85: 1058-1060, 1993

Non-patent Document 3: Yamazaki et al., Japanese Journal of Crop Science 51: 584-590, 1982

Non-patent Document 4: Merrill, S.D., Agron J. 84: 755-758, 1992

Non-patent Document 5: Nakanishi T. et al., Radioisotopes 42: 26, 1993

Non-patent Document 6: Shimotashiro, T. et al., Plant Prod. Sci. 1:248-253, 1998

Non-patent Document 7: Kendall, W.A. et al., Grass Forage Sci. 37:253-256, 1982

Non-patent Document 8: Dalton, F.N., Plant and Soil 173:157-165, 1995

Non-patent Document 9: Rajkai, K., Agroke'mia e's Talajtan 51:89-98, 2002

SUMMARY OF THE INVENTION

The aforementioned conventional technologies for measuring the weight of plant bodies, such as trees, which grow, in a continuous manner have the following problems.

The root scanner method, the method whereby dry weight is measured, and the trench method require a great deal of labor for digging or measuring if the measured object is large, such as a grown tree. In addition, because these methods are destructive, they cannot be used for measuring the same plant body continuously.

Although the minirhizotron method is suitable for observing the development of roots in the vertical direction, it allows only portions of the roots of a particular plant body that are within the field of view of the fiber scope to be observed. The method therefore does not provide an entire view of the roots as a whole.

The neutral radiography method and the AE method are both used in laboratory settings and require special measuring tools. Therefore, it is difficult to apply them for trees or the like that are located in a farm field.

In the methods whereby electric resistance or capacitance are measured for monitoring the roots of plant bodies, only the extent or depth of the roots can be monitored by calculating the surface area of the roots that are underground, and the weight of the roots cannot be measured. With regard to the method whereby electric capacitance is measured, although there are examples of the method being applied to annual flowers, it has not been applied to trees.

As mentioned above, knowing the weight of a plant body, such as a tree, is very important in gaining insights into the growth condition of the plant. And the measurement of weight is desirably performed in a non-destructive manner such that the same plant can be weighed over time. Therefore, it is an object of the invention to provide a simplified method for non-destructively measuring the weight of trees.

After research and analysis with a view to achieving the aforementioned object, the inventors realized that the weight of the root portion or the entirety of a plant body can be estimated in a non-destructive manner by initially measuring the capacitance of the root portion and the weight of the root portion or entirety of each of a plurality of plant species at different stages of growth, thereby deriving a correlation between them in advance, and then applying the correlation to a measured value of capacitance of the root portion of a particular plant body under investigation.

In one aspect, the invention provides a method for measuring the weight of a plant body, comprising: measuring the capacitance of the root portion of a plant body in vegetation; and estimating the weight of the root portion of the plant body from a measured value of the capacitance of the root portion on the basis of a correlation between the capacitance and weight of the root portion that is determined for the plant body in advance.

The invention also provides a method for measuring the weight of a plant body, comprising: measuring the capacitance of the root portion of a plant body in vegetation; and estimating the weight of the plant body from a measured value of the capacitance of the root portion on the basis of a correlation between the capacitance of the root portion and the weight of the plant body that is determined for the plant body in advance.

The invention further provides a method for estimating the surface area of the root portion of a plant body, comprising: measuring the capacitance of the root portion of a plant body in vegetation; and estimating the surface area of the root portion of the plant body from a measured value of capacitance of the root portion on the basis of a correlation between the capacitance and surface area of the root portion of the plant body that is determined in advance.

In the method of the invention, the correlation between the capacitance and surface area of the root portion of the plant body is given by the following equation:

$$C = \sum_{i=1}^{n} \frac{\varepsilon_i A_i}{4\pi d_i}$$

where $\varepsilon$ is dielectric constant, A is the surface area of the root, i is the number of elements, and d is the difference between the outer radius and the inner radius of the root.

In the method of the invention, the capacitance of the root portion of a plant body is measured by inserting electrodes into the soil where the plant body has vegetation and the aerial part of the plant body, and then applying voltage between the electrodes.

In the method of the invention, the plant body is a tree in particular.

BRIEF DESCRIPTION OF THE DRAWINGS

Fig. 1 shows an equivalent circuit of the electric configuration of a plant body.

Fig. 2 illustrates a method for measuring the capacitance of a plant body whereby electrodes are inserted into a tree portion of a plant body and into the soil nearby, to which an LCR meter is connected.

Fig. 3 shows a graph illustrating the result of measurement of the capacitance of a root portion as the depth (d) of insertion of an iron bar into soil, the distance (1) between the position of insertion of iron bar and the tree, and the height (h) of a nail driven into the tree from ground were varied.

Fig. 4 shows a graph illustrating the result of measurement of capacitance while the measurement frequency of a frequency-variable LCR mete was changed.

Fig. 5 shows a graph illustrating the result of measurement of the capacitance of the root portion of a tree and the dry weight of the root portion using an LCR meter.

Fig. 6 shows a graph illustrating the result of measurement of the capacitance of the root portion of a tree and the dry weight of the tree using an LCR meter.

Fig. 7 shows a graph illustrating the result of chronologically measuring the water content of soil and the capacitance of the root portion of a tree in the absence of irrigation of the tree.

Fig. 8 shows a graph illustrating the result of chronologically measuring the water content of soil an the capacitance of the root portion of a pot-planted tree when the tree was dried and then put in a water bath individually.

Fig. 9 schematically shows an example of a weight measuring apparatus for implementing the methods for measuring the weight of a plant body according to the invention.

DESCRIPTION OF PREFERRED EMBODIMENTS OF THE INVENTION

A preferred embodiment of the method for measuring the weight of plant bodies according to the invention will be hereafter described with reference to the attached drawings.

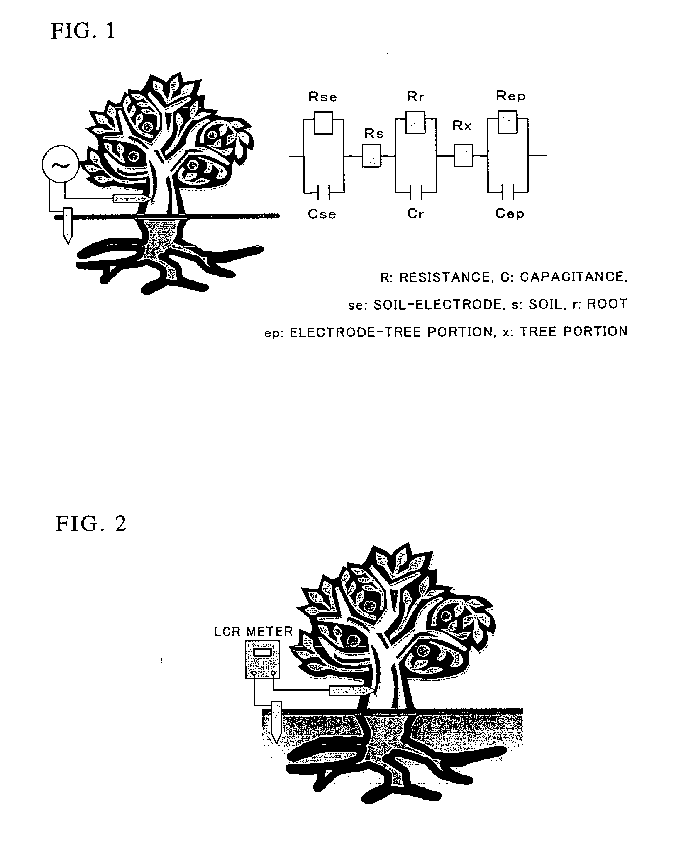

In the present embodiment, the electric capacitance of a plant body, such as a tree, is measured, and the weight of the root portion or the entirety of the plant body is estimated on the basis of the measurement result. According to Non-patent Document 8, for example, the root portion of a plant body can be regarded as a collection of biological capacitors separated from one another by a number of cell membranes. Fig. 1 shows an equivalent circuit of the electric configuration of a plant body and soil based on this premise. The equivalent circuit is that which is considered to be established between electrodes inserted into the tree portion of the plant body and the soil near the plant body.

Referring to Fig. 2, an LCR meter was connected between the both electrodes and the electric capacitance of the plant body was measured. The electrode inserted into the soil is preferably a stainless-steel bar, for example, for rust prevention purposes. The electrode inserted into soil, on the other hand, is preferably a stainless-steel nail, for example. The both electrodes are inserted at appropriate positions for measurement, as will be described later. With regard to the frequencies of the LCR meter and the condition of the soil, they are also adjusted appropriately for the measurement, as will be described later.

With reference to the equivalent circuit of Fig. 1, if the resistance Rse and capacitance Cse between soil and electrode, the resistance Rs of soil, the resistance Rx of the tree portion, and the resistance Rep and capacitance Cep between electrode and the tree portion are known in advance, the resistance Rr and capacitance Cr of the root portion can be calculated from the measured values provided by the LCR meter.

In accordance with Non-patent Document 8, for example, the following relationship is established between the capacitance C of the root portion of a plant body and its surface area:

$$C = \sum_{i=1}^{n} \frac{\varepsilon_i A_i}{4\pi d_i}$$

where $\varepsilon$ is dielectric constant, A is the surface area of the root, i is the number of elements, and d is the difference between the outer radius and the inner radius of the root.

Thus, the surface area of the root portion can be calculated by measuring capacitance C. Further, because there is a correlation between the amount of root and the amount of aerial part for each plant species, the total amount of plant biomass can be estimated from the measured value of capacitance C.

Furthermore, in accordance with the invention, the weight of the root portion or the total weight of the plant body are estimated from the measured value of capacitance C of the root portion of the plant body. For this, the invention takes advantage of the fact that there is a correlation between the capacitance and weight of the root portion or the total weight of the plant body for each plant species. Specifically, the capacitance and weight of the root portion or the total weight of the plant body are measured for different plant species at a plurality of different growth phases, and a correlation between them is determined in advance. Then, the correlation is applied to a measured value of the capacitance of the root portion of a particular plant body of interest so as to non-destructively estimate the weight of the root portion or the total weight of the plant body. A method for deriving such a correlation will be described later.

Examples

Position of electrode insertion

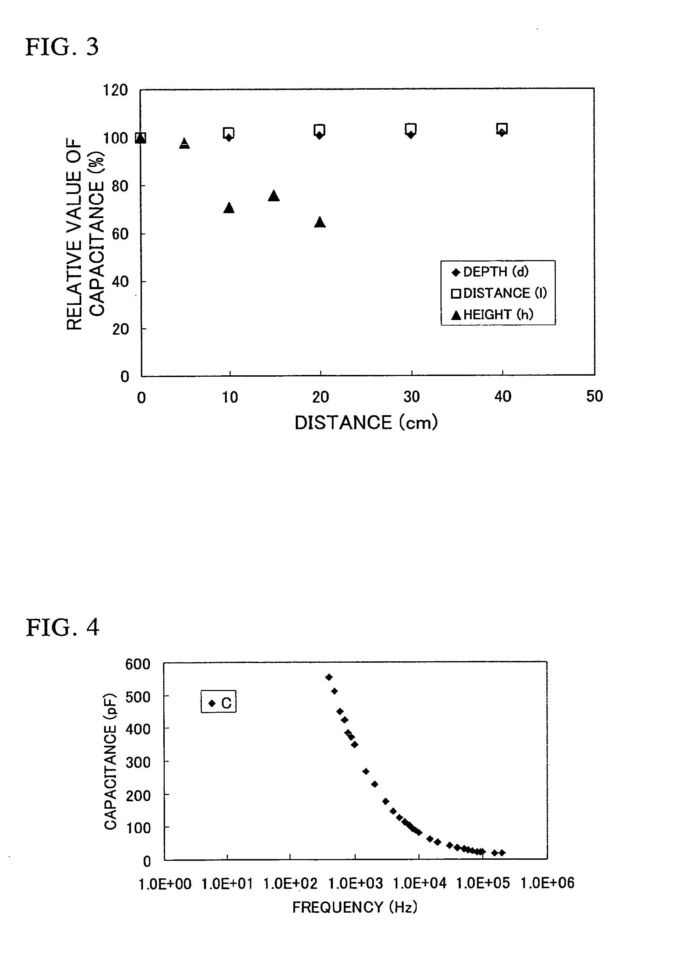

Using a Satsuma orange tree (variety: Miyagawa-Wase) grown outdoors, an experiment was conducted to examine the appropriate position of insertion of the electrodes of the LCR meter. The electrode inserted into soil was an iron bar (length: 50 cm, and diameter: 6 mm). The electrode that is driven into the tree was an iron nail (length: 4.6 cm). Capacitance was measured using the LCR meter while varying, in a stepwise manner, the depth (d) of insertion of the iron bar into soil, the distance (I) between the inserted position of the iron bar and the tree, and the height (h) of the nail driven into the tree from ground. Fig. 3 shows a graph illustrating the results of measurement. The graph shows that there is only a change of less than 5% in the value of capacitance even when the depth (d) and distance (1) were changed between 0 cm and approximately 40 cm. However, with regard to the height (h), the value of capacitance decreases as the value of h increases. It is noted that, in Fig. 3, the value of capacitance is relative to a measured value of 100% when the depth (d), distance (1), and height (h) are each 0 cm.

The measurement result in Fig. 3 indicates that the position where the nail is to be drove into the tree should be approximately 5 cm above ground (or the grafted portion).

Measurement frequency

Using a frequency-variable LCR meter, the capacitance of Satsuma orange (variety: Okitsu-Wase, biennial) with a diameter of approximately 50 cm was measured while measurement frequency was varied. Fig. 4 shows a graph of the result of measurement. It shows that as the measurement frequency increases, the measured value of capacitance decreases. In this case, 1 kHz is preferably used for measurement, which is one of the two frequencies, namely, 120 Hz and 1 kHz, that are typically used on portable frequency-variable LCR meters.

Relationship between the weight of root, total weight of plant body, and capacitance

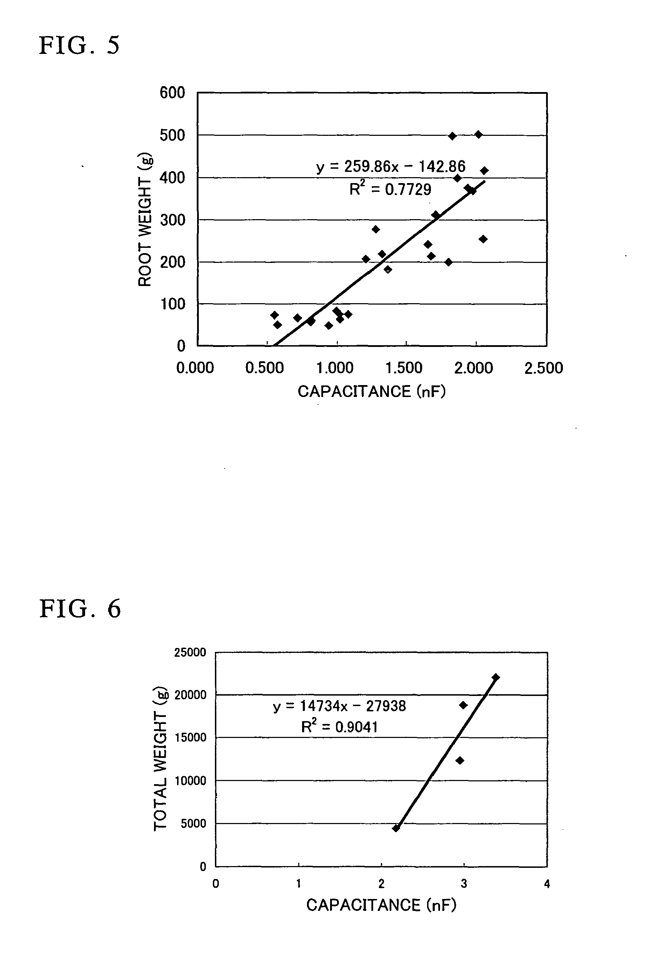

Using a Satsuma orange (variety: Okitsu-Wase) grown in a pot, an experiment was conducted to examine the relationship between the weight of root and capacitance. The electrode inserted into soil was an iron bar (length: 50 cm, and diameter: 6 mm). The electrode driven into the tree was an iron nail (length: 4.6 cm). The iron bar was inserted into soil to the depth of 20 cm at a position spaced apart from the trunk of the tree by 17 cm. The iron nail was drove into the tree 5 cm above ground. The capacitance of the root portion of the tree was measured with the frequency of 1 kHz using the LCR meter. Thereafter, the tree was dug out, torn down, and the root portion was hot-air dried and the dry weight was measured. Fig. 5 shows the results of the measurement of capacitance and dry weight conducted on a plurality of trees at different stages of growth. The graph shows that there is a strong correlation between the capacitance and dry weight of the root portion of a tree.

Using a Satsuma orange of very early-maturing variety grown outside, an experiment was conducted to examine the relationship between the weight of root and capacitance. The electrode inserted into soil was an iron bar (length: 50 cm, and diameter: 6 mm). The electrode driven into the tree was an iron nail (length: 4.6 cm). The iron bar was inserted into soil to the depth of 30 cm at a position spaced apart from the trunk of the tree by 17 cm. The iron nail was drove into the tree 5 cm above the grafted portion. The capacitance of the root portion of the tree was measured with the frequency of 1 kHz using the LCR meter. Thereafter, the tree was dug out, torn down, and the tree body was hot-air dried and its dry weight was measured. Fig. 6 shows the results of the measurement of capacitance and dry weight conducted on a plurality of trees at different stages of growth. The graph shows that there is a strong correlation between the capacitance and dry weight of the root portion of a tree.

Thus, the results of measurement shown in Figs. 5 and 6 indicate that the weight of the root portion or the entirety of a tree can be estimated from the measured value of capacitance on the basis of the relationship (such as the analytical curves in Figs. 5 and 6) between capacitance and the weight of the root portion or the entirety of a plurality of trees at different stages of growth that is derived in advance.

Relationship between the water content of soil and capacitance

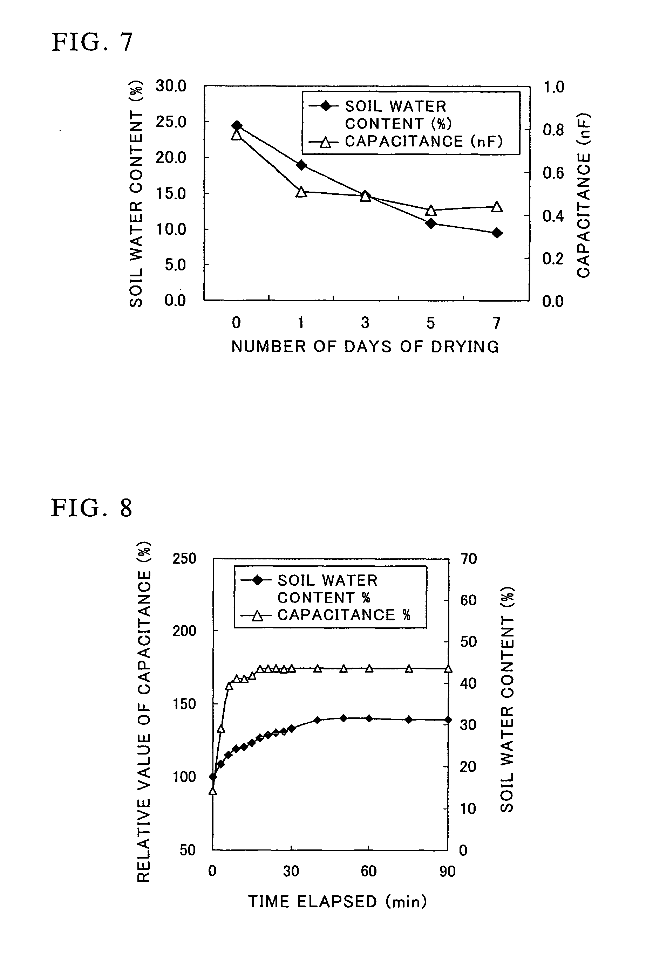

Using a Satsuma orange (variety: Otsu No. 4, sexennial) grown in a pot, an experiment was conducted to examine the relationship between the water content of soil and the capacitance of the root portion. After the tree was sufficiently irrigated, the water content of soil and the capacitance of the root portion in a condition of no irrigation were chronologically measured. For the measurement of the water content of soil, a TDR soil-moisture meter was used. Fig. 7 shows the results of measurement. The graph of Fig. 7 indicates that, although the capacitance of the root portion decreased as the soil became drier, the decrease in capacitance stops after a certain duration of time.

After the same pot-grown tree was dried, the water content of soil and the capacitance of the root portion were chronologically measured with each pot placed in a water bath. The results of measurement are shown in Fig. 8. The graph of Fig. 8 indicates that, in the case of the pot-grown tree placed in the water bath, although the capacitance of the root portion gradually increased as the water content gradually increased, the rate of increase in capacitance is somewhat lower than that of the increase of the water content.

The measurement results shown in Figs. 5 and 6 show that, when the weight of a plant body is to be measured by the method of the invention, the soil should be irrigated sufficiently once, and only after a sufficient duration of time has elapsed should the plant body be measured.

An apparatus for measuring the weight of a plant body

An apparatus for measuring the weight of a plant body according to the methods of the invention may comprise a pair of electrodes; means for applying voltage between the electrodes so as to measure the electric capacitance therebetween; and means for calculating an estimated value of the weight of the plant body or the root portion of the plant body on the basis of a measured value of the electric capacitance between the electrodes.

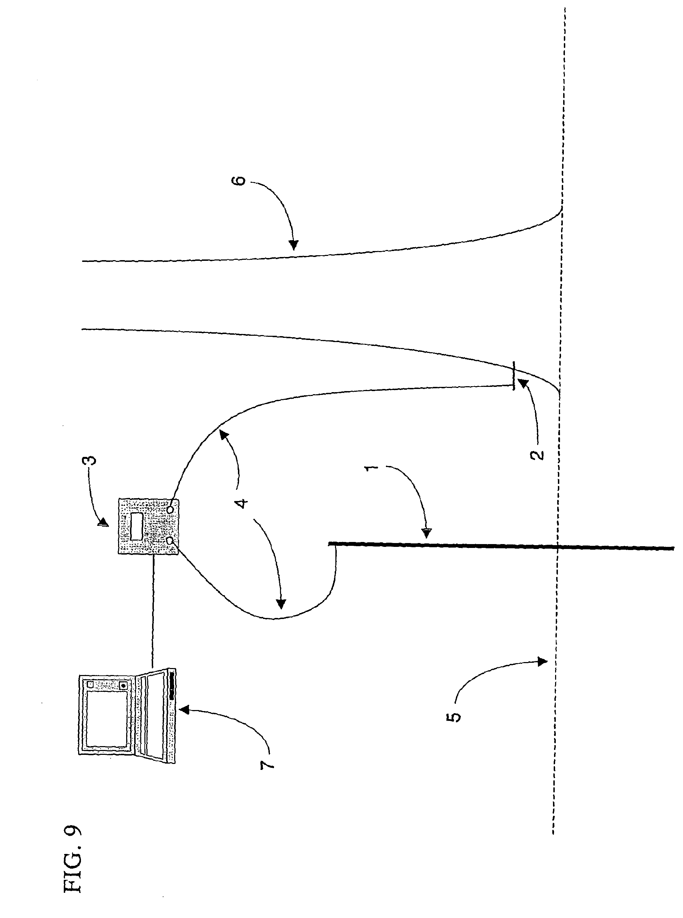

Fig. 9 schematically shows an example of such a weight measuring apparatus. In Fig. 9, an iron bar 1 inserted in the soil 5 and an iron nail 2 inserted in the ground portion of the plant body 6 constitute a pair of electrodes. The ion bar 1 and the iron nail 2 are coupled to the LCR meter 3 via leads 4, so that the LCR meter 3 can measure the capacitance between the iron bar 1 and the iron nail 2. A measured value of capacitance is outputted to a computer 7 comprised of a personal computer or the like, which calculates an estimated value of the weight of the entirety or the root portion of the plant body 6 based on the measured capacitance value.

It is noted that, although the method of measuring the weight of a plant body in accordance with the invention has been described via specific examples, the invention is not limited to any of the specific examples. It is to be understood that modifications will be apparent to those skilled in the art without departing from the spirit of the invention.

The invention thus provides a method for non-destructively diagnosing the growth or health of fruit trees or other trees in a continuous manner, and the invention can be utilized in various industries.

**Claims**

1.  A method for measuring the weight of a plant body, comprising:

    measuring the electric capacitance of the root portion of a plant body in vegetation; and estimating the weight of said root portion of said plant body from a measured value of the electric capacitance of said root portion on the basis of a correlation between the electric capacitance and weight of said root portion that is determined in advance for the relevant plant.

2.  A method for measuring the weight of a plant body, comprising:

    measuring the electric capacitance of the root portion of a plant body in vegetation; and estimating the weight of said root portion of said plant body from a measured value of the electric capacitance of said root portion on the basis of a correlation between the electric capacitance of said root portion and the weight of said plant body that is determined in advance for the relevant plant.

3.  The method according to claim 1, wherein said correlation between the electric capacitance and weight of said root portion of said plant body is given by the following equation:

$$y = 259.86x - 142.86$$

where y is the weight (g) of the root portion and x is the electric capacitance (nF).

4.  The method according to claim 2, wherein said correlation between the electric capacitance of the root portion of said plant body and the weight of said plant body is given by the following equation:

$$y = 14734x - 27938$$

where y is the weight (g) of the plant body and x is the electric capacitance (nF).

5.  The method according to any one of claims 1 to 4, wherein the electric capacitance of the root portion of said plant body is measured by inserting electrodes into the soil where said plant body has vegetation and into the aerial part of said plant body, and then applying voltage between said electrodes.

6.  The method according to any one of claims 1 to 5, wherein said plant body is a tree.

7.  An apparatus for measuring the weight of a plant body or the root portion of a plant body by the method according to any one of claims 1 to 6, comprising:

    a pair of electrodes; means for applying voltage between said electrodes so as to measure the electric capacitance therebetween; and means for calculating an estimated value of the weight of said plant body or the root portion of said plant body on the basis of a measured value of the electric capacitance between said electrodes.

FIG. 1

R: RESISTANCE, C: CAPACITANCE,

se: SOIL-ELECTRODE, s: SOIL, r: ROOT

ep: ELECTRODE-TREE PORTION, x: TREE PORTION

FIG. 2

FIG. 3

FIG. 4

## FIG. 5

$$y = 259.86x - 142.86$$
$$R^2 = 0.7729$$

## FIG. 6

$$y = 14734x - 27938$$
$$R^2 = 0.9041$$

## FIG. 7

## FIG. 8

FIG. 9

EP 1 726 924 A1

**EP 1 726 924 A1**

European Patent
Office

**EUROPEAN SEARCH REPORT**

Application Number

EP 05 25 7762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JANNY VAN BEEM ET AL.: "Estimating root mass in maize using a portable capacitance meter" AGRONOMY JOURNAL, vol. 90, 1998, pages 566-570, XP009068148 agron * page 567 - page 568 * | 1,7 | INV. G01G19/00 |
| Y | | 5,6 | |
| A | | 2-4 | |
| | ----- | | |
| Y,D | PATENT ABSTRACTS OF JAPAN vol. 2002, no. 07, 3 July 2002 (2002-07-03) -& JP 2002 071608 A (YAMAURA ITSUO), 12 March 2002 (2002-03-12) * the whole document * | 5,6 | |
| A | | 1-4,7 | |
| | ----- | | |

| | TECHNICAL FIELDS SEARCHED (IPC) |
|---|---|
| | G01G |

The present search report has been drawn up for all claims

| Place of search | Date of completion of the search | Examiner |
|---|---|---|
| Munich | 22 June 2006 | Grand, J-Y |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ........................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 05 25 7762

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2006

| Patent document cited in search report | Publication date | Patent family member(s) | Publication date |
|---|---|---|---|
| JP 2002071608 A | 12-03-2002 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002071608 A

### Non-patent literature cited in the description

- **MORITA, S.** *Jpn J. Corp Sci.,* 1992, vol. 61, 101-106
- **BOX, J.E. ; RAMSEUR, E.L.** *Agron J.,* 1993, vol. 85, 1058-1060
- **YAMAZAKI et al.** *Japanese Journal of Crop Science,* 1982, vol. 51, 584-590
- **MERRILL, S.D.** *Agron J.,* 1992, vol. 84, 755-758
- **NAKANISHI T. et al.** *Radioisotopes,* 1993, vol. 42, 26
- **SHIMOTASHIRO, T. et al.** *Plant Prod. Sci.,* 1998, vol. 1, 248-253
- **KENDALL, W.A. et al.** *Grass Forage Sci.,* 1982, vol. 37, 253-256
- **DALTON, F.N.** *Plant and Soil,* 1995, vol. 173, 157-165
- **RAJKAI, K.** *Agroke'mia e's Talajtan,* 2002, vol. 51, 89-98